# EUROPÄISCHE PATENTANMELDUNG

(11) **EP 2 874 286 A1**
(43) Veröffentlichungstag der Anmeldung: **20.05.2015**
(21) Anmeldenummer: 13192929.1
(22) Anmeldetag: 14.11.2013
(51) Int. Cl.: H02K 15/00, H02K 17/16

(54) **Rotor mit einem Einlegeteil**

(71) Anmelder: Siemens Aktiengesellschaft, 80333 München (DE)
(72) Erfinder: Pfaller, Maximilian, 90441 Nürnberg (DE); Brandl, Konrad, 93107 Thalmassing (DE); Trepper, André, 91052 Erlangen (DE)

(57) **Zusammenfassung**

Die Erfindung betrifft einen Rotor (1, 51) für eine elektrische Maschine (43), der ein Blechpaket (2) umfasst, das in einer axialen Richtung (3) angeordnete Bleche (7) und eine Nut (16) aufweist, wobei sich das Blechpaket (2) und die Nut (16) in der axialen Richtung (3) von einem ersten axialen Ende (4) zu einem zweiten axialen Ende (5) entlang einer Drehachse (6) erstrecken, wobei die Nut (16) eine Nutfüllung aufweist, die ein erstes Material (8) umfasst, wobei das erste Material (8) ein metallisches Element (9) des Periodensystems aufweist, wobei die Nutfüllung einen gegossenen Metallbereich (13) aufweist, der sich mit einem Endbereich (18) an dem ersten axialen Ende (4) in einer ersten Richtung (21, 31) senkrecht zu der axialen Richtung (3) zumindest teilweise über das Blechpaket (2) erstreckt, wobei der gegossene Metallbereich (13) von dem ersten axialen Ende (4) bis zu dem zweiten axialen Ende (5) durch die Nut (16) verläuft und in der ersten Richtung (31) senkrecht zu der axialen Richtung (3) einen ersten Teil der Nut (16) mit einem ersten Material (8) ausfüllt, wobei ein Einlegeteil (10) in der ersten Richtung (31) senkrecht zu der axialen Richtung (3) einen zweiten Teil der Nut (16) mit einem zweiten Material (12) ausfüllt, wobei das zweite Material (12) das metallische Element (9) des Periodensystems aufweist, wobei das Einlegeteil (10) und der gegossene Metallbereich (13) durch eine Verbindungszone (11) stoffschlüssig verbunden sind, eine Serie (50) von Rotoren (1, 51), ein Einlegeteil (10, 63) für einen Rotor (1, 51), eine elektrische Maschine (43), die einen Rotor (1) und einen Stator (48) aufweist, ein Verfahren zur Herstellung eines Rotors (1, 51) sowie eine Verwendung eines Einlegeteils (10, 63) für einen Rotor (1, 51).

## Beschreibung

Die Erfindung betrifft einen Rotor für eine elektrische Maschine,
- der ein Blechpaket umfasst, das in einer axialen Richtung angeordnete Bleche und eine Nut aufweist,
- wobei sich das Blechpaket und die Nut in der axialen Richtung von einem ersten axialen Ende zu einem zweiten axialen Ende entlang einer Drehachse erstrecken,
- wobei die Nut eine Nutfüllung aufweist, die ein erstes Material umfasst,
- wobei das erste Material ein metallisches Element des Periodensystems aufweist,
- wobei die Nutfüllung einen gegossenen Metallbereich aufweist, der sich an dem ersten axialen Ende mit einem Endbereich in einer ersten Richtung senkrecht zu der axialen Richtung zumindest teilweise über das Blechpaket erstreckt.

Ferner betrifft die Erfindung eine Serie von Rotoren mit dem Rotor, ein Einlegeteil für den Rotor, eine elektrische Maschine mit dem Rotor, sowie ein Verfahren zur Herstellung des Rotors und eine Verwendung des Einlegeteils für den Rotor.

Die Nut derartiger Rotoren ist zu einem im Wesentlichen vollständigen Teil mit einem oder mehreren Bauteilen als Nutfüllung gefüllt, deren Materialien das metallische Element des Periodensystems aufweisen. So kann der überwiegende Teil der Nutfüllung ähnliche Materialeigenschaften aufweisen, die ohne große konstruktive Maßnahmen eine Qualität des Rotors mit bestimmen. Es kann so z.B. die Nutfüllung Bauteile mit ähnlichen Wärmeausdehnungskoeffizienten aufweisen, die zu geringeren mechanischen Verspannungen innerhalb des Rotors bei dessen Erwärmung und damit zu einer geringeren Gefahr einer Schädigung des Rotors führen.

Ein derartiger Rotor ist auch aus der Veröffentlichung JP 10 028360 A bekannt. Der Veröffentlichung liegt der Ausgangspunkt zugrunde, dass bei Käfigläufern mit Aluminium und Kupfer das Kopplungsphänomen zwischen unterschiedlichen Metallen, d.h. das Bilden einer hochohmigen Reaktionsschicht, nicht beachtet wurde. Diese führt nämlich zu einer Verschlechterung der Motoreigenschaften. Die Veröffentlichung beschreibt, dass die Effizienz eines Motors mit dem Käfigläufer dadurch verbessert wird, dass ein mit Aluminium beschichteter Kupferstab oder ein Aluminiumstab eine Nut zu etwa 70% ausfüllt und der Rest der Nut mit gegossenem Aluminium ausgefüllt ist. Hierbei wurde beschrieben, dass die Reaktionsschicht sich weder bei dem beschichteten Kupferstab, noch bei dem Aluminiumstab ausbildet. Bei der Verwendung des Aluminiumstabs wird aufgrund des gleichen Materials für den Stab und den Druckguss eine Reaktionsschicht mit hohem Widerstand vermieden. Des Weiteren weist der Aluminiumstab eine hohe elektrische Leitfähigkeit auf, da er keine Hohlräume aufweist, wie diese im Aluminiumdruckguss auftreten. Dies trägt zu einer Qualität eines Rotors für eine elektrische Maschine mit hohem Wirkungsgrad bei.

Der Erfindung liegt daher die Aufgabe zugrunde, einen Rotor für eine elektrische Maschine mit einer hohen Qualität zur Verfügung zu stellen, der kostengünstig hergestellt werden kann.

Diese Aufgabe wird durch einen Rotor mit den Merkmalen nach Anspruch 1 gelöst. Ein erfindungsgemäßer Rotor für eine elektrische Maschine umfasst
- ein Blechpaket, das in einer axialen Richtung angeordnete Bleche und eine Nut aufweist,
- wobei sich das Blechpaket und die Nut in der axialen Richtung von einem ersten axialen Ende zu einem zweiten axialen Ende entlang einer Drehachse erstrecken,
- wobei die Nut eine Nutfüllung aufweist, die ein erstes Material umfasst,
- wobei das erste Material ein metallisches Element des Periodensystems aufweist,
- wobei die Nutfüllung einen gegossenen Metallbereich aufweist, der sich mit einem Endbereich an dem ersten axialen Ende in einer ersten Richtung senkrecht zu der axialen Richtung zumindest teilweise über das Blechpaket erstreckt,
- wobei der gegossene Metallbereich von dem ersten axialen Ende bis zu dem zweiten axialen Ende durch die Nut verläuft und in der ersten Richtung senkrecht zu der axialen Richtung einen ersten Teil der Nut mit einem ersten Material ausfüllt,
- wobei ein Einlegeteil in der ersten Richtung senkrecht zu der axialen Richtung einen zweiten Teil der Nut mit einem zweiten Material ausfüllt,
- wobei das zweite Material das metallische Element des Periodensystems aufweist,
- wobei das Einlegeteil und der gegossene Metallbereich durch
   eine Verbindungszone stoffschlüssig verbunden sind.

Die Aufgabe wird auch durch eine Serie mit den Merkmalen nach Anspruch 10 gelöst. Eine erfindungsgemäße Serie von Rotoren für mindestens eine elektrische Maschine weist einen ersten erfindungsgemäßen Rotor und einen zweiten Rotor auf, wobei der zweite Rotor
- ein zweites Blechpaket aufweist, das in einer axialen Richtung angeordnete Bleche und eine zweite Nut aufweist,
- wobei sich das zweite Blechpaket und die zweite Nut in der axialen Richtung von einem dritten axialen Ende zu einem vierten axialen Ende entlang einer Drehachse erstreckt,
- wobei die zweite Nut eine zweite Nutfüllung aufweist, die ein viertes Material umfasst,
- wobei das vierte Material das metallische Element des Periodensystems aufweist,
- wobei die zweite Nutfüllung einen gegossenen zweiten Metallbereich aufweist, der sich an dem dritten axialen Ende mit einem zweiten Endbereich in einer ersten Richtung senkrecht zu der axialen Richtung zumindest teilweise über das zweite Blechpaket erstreckt,
- wobei ein erstes Volumen, das das Volumen des gegossenen Metallbereichs und das Volumen des Einlegeteils umfasst, größer ist als ein zweites Volumen, das das Volumen des gegossenen zweiten Metallbereichs umfasst.

Die Aufgabe wird auch durch ein Einlegeteil mit den Merkmalen nach Anspruch 12 gelöst. Ein erfindungsgemäßes Einlegeteil ist für einen erfindungsgemäßen Rotor.

Die Aufgabe wird auch durch eine elektrische Maschine mit den Merkmalen nach Anspruch 13 gelöst. Eine erfindungsgemäße elektrische Maschine weist einen erfindungsgemäßen Rotor und einen Stator auf.

Die Aufgabe wird auch durch ein Verfahren zur Herstellung mit den Merkmalen nach Anspruch 14 gelöst. Bei einem erfindungsgemäßen Verfahren zur Herstellung eines erfindungsgemäßen Rotors werden bei einem Gießen des gegossenen Metallbereichs das Einlegeteil und der gegossene Metallbereich durch eine Verbindungszone stoffschlüssig verbunden.

Die Aufgabe wird auch durch die Verwendung eines Einlegeteils mit den Merkmalen nach Anspruch 15 gelöst. Bei einer erfindungsgemäßen Verwendung wird ein Einlegeteil für einen erfindungsgemäßen Rotor verwendet.

Ein erfindungsgemäßer Rotor löst die Aufgabe vorteilhaft, indem durch den gegossenen Metallbereich, das Einlegeteil und deren stoffschlüssige Verbindung durch die Verbindungszone einen Rotor hoher Qualität mit geringem Material- und Herstellungsaufwand zur Verfügung gestellt werden kann. Ein erfindungsgemäßer Rotor mit einer hohen Qualität kann vorteilhaft kostengünstig mit einem Verfahren hergestellt werden, bei dem ein Gießen des gegossenen Metallbereichs von einem der axialen Enden des Blechpakets erfolgt. Vorteilhaft kann eine kostengünstige Vorrichtung zu einem Gießen des gegossenen Metallbereichs eingesetzt werden, da die Vorrichtung eine geringere Menge an einem flüssigen ersten Material erzeugen und in die Nut transportieren muss.

Ein erfindungsgemäßer Rotor kann für eine Drehung des Rotors um die Drehachse eine Welle aufweisen, die sich entlang der Drehachse erstreckt und an der das Blechpaket befestigt ist.

Die Verbindungszone weist metallische Bindungen zwischen dem ersten Material und dem zweiten Material auf, die das Einlegeteil und den gegossenen Metallbereich stoffschlüssig verbinden.

Das Einlegeteil kann überwiegend aus dem zweiten Material bestehen. So kann vorteilhaft und kostengünstig ein Stück des zweiten Materials als Ausgangspunkt für eine Herstellung des Einlegeteils verwendet werden, da das Stück überwiegend das Volumen des Einlegeteils ausfüllt. Es müssen so vorteilhaft keine oder nur geringe Mengen an weiteren Materialien an das Einlegeteil angebracht werden. Geringe Mengen an Materialen können zum Beispiel bei der Herstellung des Einlegeteils durch ein Beschichten der Oberfläche des Einlegeteils mit einem dritten Material angebracht werden.

Der gegossene Metallbereich kann aus dem ersten Material bestehen. So kann der gegossene Metallbereich vorteilhaft kostengünstig in einem Stück gegossen werden.

Ein Material, z.B. eine Legierung, kann verschiedene Elemente, z.B. verschiedene metallische Elemente, des Periodensystems aufweisen. Der Massenanteil eines Elements des Periodensystems an dem Material berechnet sich, indem die Masse des Anteils des Elements an dem Material durch die Gesamtmasse des Materials dividiert wird. Ein Massenanteil in Prozentangaben berechnet sich, indem die Masse des Anteils des Elements an dem Material durch die Gesamtmasse des Materials dividiert wird und mit 100 multipliziert wird. Insbesondere gelten diese Berechnungen des Massenanteils für eine Legierung, da bei einer Legierung der Massenanteil aussagekräftiger ist als bei anderen Materialien, bei denen die verschiedenen Elemente des Periodensystems mit geringeren Kräften als bei metallischen Bindungen miteinander verbunden sind. Eine Legierung ist ein Metall, das metalltypische Eigenschaften aufweist. Eine Legierung ist damit auch ein Material, bei dem der Masseanteil eines metallischen Elementes des Periodensystems mindestens 99% beträgt. Ein metallisches Element des Periodensystems kann in einer Legierung einen Masseanteil größer 0% bis nahezu 100% aufweisen. Wenn die Verbindungszone unterschiedliche Masseanteile eines metallischen Elementes des ersten Materials und eines Materials der Oberfläche des Einlegeteils aufweist, kann die Verbindungszone vorteilhaft eine Legierungszone sein. Das Material der Oberfläche des Einlegeteils ist das zweite Material oder das dritte Material. Letzteres, wenn durch die Herstellung des Einlegeteils die Oberfläche des Einlegeteils mit dem dritten Material beschichtet worden ist. Die Legierungszone weist mindestens eine metallische Phase auf, in der man eine gegenüber dem ersten Material und dem Material der Oberfläche des Einlegeteils unterschiedliche stöchiometrische Zusammensetzung erkennen kann. Unter der Oberfläche des Einlegeteils wird grundsätzlich die Oberfläche des Einlegeteils vor einem Gießen des gegossenen Metallbereichs verstanden.

Das Blechpaket kann weitere Nuten umfassen, die sich in der axialen Richtung von dem ersten axialen Ende zu dem weiteren axialen Ende entlang der Drehachse erstrecken, wobei die weiteren Nuten Nutfüllungen aufweisen. So können die weiteren Nuten vorteilhaft kostengünstig von einem der axialen Enden aus mit dem ersten Material gefüllt werden.

Der gegossene Metallbereich kann gegossene Teilbereiche umfassen, die in den weiteren Nuten von dem ersten axialen Ende zu dem zweiten axialen Ende verlaufen und in der ersten Richtung senkrecht zu der axialen Richtung erste Teile der weiteren Nuten mit dem ersten Material ausfüllen. So weisen die Nutfüllungen der weiteren Nuten die gegossenen Teilbereiche auf, wobei weitere Einlegeteile in der ersten Richtung senkrecht zu der axialen Richtung zweite Teile der weiteren Nuten mit dem zweiten Material ausfüllen und die weiteren Einlegeteile und die gegossenen Teilbereiche durch weitere Verbindungszonen stoffschlüssig verbunden sind. So können die Nutfüllungen des ersten Teils der Nut und die entsprechenden ersten Teile der weiteren Nuten vorteilhaft kostengünstig in einer hohen Qualität aus dem ersten Material gegossen werden und das Einlegeteil und die weiteren Einlegeteile und deren stoffschlüssigen Verbindungen durch die Verbindungszonen in hoher Qualität mit geringem Material- und Herstellungsaufwand hergestellt werden.

Der Endbereich des gegossenen Metallbereichs kann den gegossenen Metallbereich mit den gegossenen Teilbereichen stoffschlüssig durch das erste Material zu einem Kurzschlussring verbinden. So kann der Kurzschlussring vorteilhaft kostengünstig in einer hohen Qualität für einen Betrieb einer elektrischen Maschine hergestellt werden.

Der gegossene Metallbereich kann sich in einem weiteren Endbereich an dem zweiten axialen Ende in einer ersten Richtung senkrecht zu der axialen Richtung zumindest teilweise über das Blechpaket erstrecken. So kann ein erfindungsgemäßer Rotor im Hinblick auf die Länge des Rotors, die zwischen dem ersten und dem zweiten axialen Ende des Rotors gemessen ist, vorteilhaft kostengünstig in einer hohen Qualität an dem ersten und an dem zweiten axialen Ende fertiggestellt werden. Im Gegensatz dazu wäre ein erfindungsgemäßer Rotor, der durch Aneinanderreihung von Blechpaketen entsteht, nicht fertiggestellt, wenn der Kurzschlussring jeweils nur an einem der axialen Enden an zwei Blechpaketen gegossen wird. Hier müssten für die Fertigstellung des Rotors in Hinblick auf die Länge des Rotors die mindestens zwei Blechpakete noch verbunden werden.

Ein Verbundteil weist den gegossenen Metallbereich und das mit dem gegossenen Metallbereich durch die Verbindungszone stoffschlüssig verbunden Einlegeteil auf.

Vorteilhaft kann das Verbundteil auch die weiteren Einlegeteile aufweisen. Das Verbundteil kann vorteilhaft die Nutfüllungen der Nut und der weiteren Nuten, insbesondere aller Nuten, die sich in der axialen Richtung von einem ersten axialen Ende zu einem zweiten axialen Ende entlang einer Drehachse erstrecken, bilden. So können vorteilhaft die notwendigen Nutfüllungen bei einem Verfahren zur Herstellung eines erfindungsgemäßen Rotors durch ein Einlegen des Einlegeteils und der weiteren Einlegeteile und durch ein Gießen des gegossenen Metallbereichs hergestellt werden.

Eine erfindungsgemäße Serie von Rotoren für mindestens eine elektrische Maschine weist auch den weiteren Vorteil auf, dass die Serie, die einen zweiten Rotor aufweist, kostengünstig um den Rotor mit dem Einlegeteil als ersten Rotor erweitert werden kann. Unter anderem muss hierzu keine neue Vorrichtung für ein Gießen des gegossenen Metallbereichs angeschafft werden, wenn eine bestehende Vorrichtung zum Gießen des gegossenen Metallbereichs bei einer Nutfüllung des ersten Rotors ohne Einlegeteil das erste Material nicht in einer ausreichenden Menge für eine hohe Qualität des Rotors zur Verfügung stellen kann. Falls der zweite Rotor ein zweites Einlegeteil umfasst, umfasst das zweite Volumen das Volumen des gegossenen zweiten Metallbereichs und das Volumen des zweiten Einlegeteils. Das Volumen des Einlegeteils kann dann vorteilhaft größer sein als das Volumen des zweiten Einlegeteils, damit keine neue Vorrichtung zum Gießen des gegossenen Metallbereichs angeschafft werden muss. Weist der erste Rotor weitere Einlegeteile in weiteren Nuten auf, so umfasst das erste Volumen auch die Volumina der weiteren Einlegeteile. Entsprechendes gilt auch für den zweiten Rotor, wenn dieser weitere Einlegeteile aufweist.

Ein erfindungsgemäßes Einlegeteil für einen erfindungsgemäßen Rotor weist auch den weiteren Vorteil auf, dass das Einlegeteil kostengünstig mit einer hohen Qualität unabhängig von einer Herstellung des Rotors hergestellt werden kann.

Eine erfindungsgemäße elektrische Maschine weist auch den weiteren Vorteil auf, dass der gegossene Metallbereich, das Einlegeteil und deren stoffschlüssige Verbindung durch die Verbindungszone ein vorteilhaftes magnetisches Zusammenwirken zwischen dem Rotor und dem Stator über einen Luftspalt kostengünstig in einer hohen Qualität ermöglicht. Hierzu kann der gegossene Metallbereich, das Einlegeteil und deren stoffschlüssige Verbindung durch die Verbindungszone das Zusammenpressen des Blechpakets vorteilhaft unterstützen.

Der Luftspalt ist in Richtungen senkrecht zur axialen Richtung durch den Stator und den Rotor begrenzt. Der Rotor kann eine Einrichtung aufweisen, um über den Luftspalt mit dem Stator, insbesondere mit einer am Stator befestigten Wicklung, magnetisch zusammenwirken zu können. Die Einrichtung kann hierfür einen Permanentmagneten und/oder eine Wicklung aufweisen.

Bei einer erfindungsgemäßen elektrischen Maschine kann vorteilhaft kostengünstig die Einrichtung eine Kurzschlusswicklung aufweisen, die den gegossenen Metallbereich, das Einlegeteil und die Verbindungszone umfasst.

Bei einer erfindungsgemäßen elektrischen Maschine kann die Welle mithilfe einer ersten Lagervorrichtung in einem ersten Lagerschild und mithilfe einer zweiten Lagervorrichtung in einem zweiten Lagerschild gelagert sein. Die Lagerschilde oder ein Gehäuse, das die Lagerschilde aufweist, kann so vorteilhaft als Drehmomentstütze genutzt werden.

Beim Betrieb einer erfindungsgemäßen elektrischen Maschine als Generator wird der Rotor durch mechanische Energie in eine Drehung um die Drehachse versetzt. Durch das magnetische Zusammenwirken zwischen Rotor und Stator kann die mechanische in elektrische Energie umgewandelt werden. Die elektrische Energie kann an der Wicklung, die am Stator befestigt ist, durch Anschließen eines elektrischen Verbrauchers entnommen werden.

Beim Betrieb einer erfindungsgemäßen elektrischen Maschine als Motor wird über die Wicklung elektrische Energie zugeführt und durch das magnetische Zusammenwirken zwischen Stator und Rotor elektrische Energie in mechanische Energie umgewandelt. Dabei wird der Rotor in Drehung um die Drehachse versetzt und es kann an der Welle mechanische Energie an einen mechanischen Verbraucher in Form einer Drehbewegung abgegeben werden.

Ein erfindungsgemäßes Verfahren zur Herstellung eines erfindungsgemäßen Rotors weist auch den weiteren Vorteil auf, dass eine geringere Menge an Energie für ein Herstellen der Nutfüllung und des Endbereichs des gegossenen Metallbereichs notwendig ist.

Eine erfindungsgemäße Verwendung eines erfindungsgemäßen Einlegeteils weist auch den weiteren Vorteil auf, dass das Einlegeteil vorteilhaft kostengünstig für einen Rotor mit einer hohen Qualität verwendet werden kann, ohne dass ein Rotor, insbesondere ein Blechpaket, für die Verwendung des Einlegeteils konstruktiv geändert werden muss.

Vorteilhafte Ausgestaltungen der Erfindung sind in den abhängigen Ansprüchen angegeben.

So ist eine Ausgestaltung eines erfindungsgemäßen Rotors vorteilhaft, bei der das zweite Material einen niedrigeren Schmelzpunkt aufweist als das erste Material. Es kann so vorteilhaft kostengünstig eine hohe Qualität des Rotors erreicht werden. Unter anderem kann bei der Herstellung des Rotors oder beim Gießen, insbesondere Druckgießen, des gegossenen Metallbereichs, der gegossene Metallbereich aufgrund der höheren Schmelztemperatur des ersten Materials gegenüber dem zweiten Material kostengünstig stoffschlüssig durch die Verbindungszone mit dem Einlegeteil in einer vorteilhaft hohen Qualität in den Verbindungseigenschaften verbunden werden. Die gegenüber dem Schmelzpunkt des zweiten Materials höhere Temperatur einer Schmelze des ersten Materials ermöglicht ein besseres Auf- oder Anschmelzen einer Oberfläche des Einlegeteils.

In einer weiteren vorteilhaften Ausgestaltung eines erfindungsgemäßen Rotors weist das erste Material einen niedrigeren Schmelzpunkt auf als das zweite Material. Es kann so vorteilhaft kostengünstig eine hohe Qualität des Rotors erreicht werden. Es kann bei der Herstellung des Rotors oder beim Gießen, insbesondere Druckgießen, des gegossenen Metallbereichs, das erste Material aufgrund seines niedrigeren Schmelzpunktes in einem ausreichend flüssigen Zustand in einer ausreichenden Menge als Schmelze für den mit hoher Qualität vorteilhaft homogen gegossenen Metallbereich, insbesondere vorteilhaft für den Endbereich und vorteilhaft für den gegebenenfalls vorhandenen weiteren Endbereich des gegossenen Metallbereichs, und für die stoffschlüssige Verbindung mit vorteilhaft hoher Qualität in den Verbindungseigenschaften zur Verfügung stehen. Ein Erstarren der Schmelze erfolgt vorteilhaft nicht so schnell wie in Fällen, in denen das erste Material einen höheren Schmelzpunkt aufweist. Weiterhin vorteilhaft kann so der Kurzschlussring vorteilhaft kostengünstig in einer hohen Qualität für einen Betrieb einer elektrischen Maschine hergestellt werden. Zu der hohen Qualität für den Betrieb trägt die hohe elektrische Leitfähigkeit und die mechanische Festigkeit des gegossenen Metallbereichs bei, die dadurch erreicht werden kann, dass das erste Material aufgrund seines niedrigeren Schmelzpunktes in einem ausreichend flüssigen Zustand in einer ausreichenden Menge als Schmelze bei der Herstellung des Rotors zur Verfügung stehen. Vorteilhaft kann dies auch für den weiteren Endbereich des gegossenen Metallbereichs gelten, wenn ein erfindungsgemäßer Rotor mit einem Verfahren hergestellt wird, bei dem ein Gießen des gegossenen Metallbereichs von dem ersten axialen Ende des Blechpakets erfolgt.

In einer weiteren vorteilhaften Ausgestaltung eines erfindungsgemäßen Rotors weist die Verbindungszone ein weiteres metallisches Element des Periodensystems auf. Vorteilhaft wird durch ein drittes Material, das das weitere metallische Element aufweist eine mechanisch beständige Verbindung erreicht, wobei die Materialeigenschaften des ersten und zweiten Materials vorteilhaft nicht oder nur im geringen Umfang sich ändern oder geändert werden müssen. Es kann so vorteilhaft kostengünstig eine hohe Qualität des Rotors erreicht werden. Vorteilhaft wird bei der Herstellung des Einlegeteils eine Oberfläche des Einlegeteils mit dem dritten Material beschichtet, das das weitere metallische Element des Periodensystems aufweist. Bei einem Verfahren zur Herstellung des Rotors kann dann vorteilhaft die Beschichtung beim Gießen, insbesondere Druckgießen, des gegossenen Metallbereichs mit dem ersten Material angeschmolzen oder aufgeschmolzen werden. So kann dann die Verbindungszone des hergestellten Rotors das weitere metallische Element des Periodensystems aufweisen. Insbesondere ist das weitere metallische Element in dem ersten Material des gegossenen Metallbereichs und/oder dem zweiten Material des Einlegeteils nicht vorhanden oder inhomogen verteilt vorhanden.

Das dritte Material kann einen niedrigeren Schmelzpunkt als das erste Material aufweisen. So kann das erste Material vorteilhaft kostengünstig stoffschlüssig durch die Verbindungszone mit dem Einlegeteil in einer vorteilhaft hohen Qualität in den Verbindungseigenschaften verbunden werden.

Vorteilhaft kann das zweite Material des Einlegeteils außer dem metallischen Element keine oder nur mit sehr geringem Massenanteil Verunreinigungen durch Elemente des Periodensystems aus dem ersten Material aufweisen. So können vorteilhaft die ursprünglichen Materialeigenschaften des zweiten Materials erhalten bleiben, indem kostengünstig bei einem Verfahren zur Herstellung des Rotors die Beschichtung beim Gießen, insbesondere Druckgießen, des gegossenen Metallbereichs mit dem ersten Material nur angeschmolzen wird.

In einer weiteren vorteilhaften Ausgestaltung eines erfindungsgemäßen Rotors erstreckt sich ein Ende des Einlegeteils in den Endbereich des gegossenen Metallbereichs und das Ende des Einlegeteils ist durch die Verbindungszone stoffschlüssig mit dem gegossenen Metallbereich verbunden. Durch die Erstreckung des Einlegeteils in den Endbereich des gegossenen Metallbereichs muss das erste Material auf eine weniger hohe Temperatur erhitzt werden, um die stoffschlüssige Verbindung durch die Verbindungszone mit hoher Qualität in den Verbindungseigenschaften zu erreichen. Da sich der gegossene Metallbereich in dem Endbereich in der ersten Richtung senkrecht zu der axialen Richtung zumindest teilweise über das Blechpaket erstreckt sind in dem Endbereich Temperaturverluste einer Schmelze des ersten Materials geringer als in der Nut. Vorteilhaft kostengünstig kann das erste Material nur auf eine Temperatur erhitzt werden, die ein Bilden der stoffschlüssigen Verbindung durch die Verbindungszone nur außerhalb der Nut mit einer hohen Qualität sicherstellt.

Es kann sich der gegossene Metallbereich mit einem weiteren Endbereich an dem zweiten axialen Ende in der ersten Richtung senkrecht zu der axialen Richtung zumindest teilweise über das Blechpaket erstrecken, wobei sich ein weiteres Ende des Einlegeteils in den weiteren Endbereich des gegossenen Metallbereichs erstreckt und das weitere Ende des Einlegeteils durch eine weitere Verbindungszone stoffschlüssig mit dem gegossenen Metallbereich verbunden ist. Dies kann vorteilhaft dazu beitragen, dass das Blechpaket gegen Umwelteinflüsse mechanisch beständig zusammengehalten wird und der Rotor kostengünstiger gefertigt werden kann. Der erste Teil der Nut kann dann in den Richtungen senkrecht zu der axialen Richtung eine geringere Erstreckung aufweisen, da der gegossene Metallbereich in einem geringen Maße zum mechanisch beständigen Zusammenhalten des Blechpakets beitragen muss. Unter anderem kann dadurch eine kostengünstige Vorrichtung zum Gießen des gegossenen Metallbereichs eingesetzt werden, da die Vorrichtung aus einer geringeren Menge an erstem Material den gegossenen Metallbereich vorteilhaft kostengünstig herstellen kann.

In einer weiteren vorteilhaften Ausgestaltung eines erfindungsgemäßen Rotors weist das erste Material überwiegend eine erste Legierung auf, in der das metallische Element des Periodensystems den größten Massenanteil aufweist. Es kann so vorteilhaft kostengünstig eine hohe Qualität bei dem Rotor erreicht werden, da für ein Gießen des gegossenen Metallbereichs eine erste Material verwendet werden kann, das mit dem Einlegeteil vorteilhaft kostengünstig über die Verbindungszone die stoffschlüssige Verbindung eingeht. Vorteilhaft müssen hierfür Vorrichtungen und Verfahren zur Herstellung des Rotors, insbesondere zum Gießen des gegossenen Metallbereichs, nur geringfügig angepasst werden. Insbesondere kann eine Anpassung vorteilhaft kostengünstig nur durch das Verwenden eines anderen ersten Materials zum Gießen des gegossenen Metallbereichs bestehen.

Der Masseanteil des metallischen Elements des Periodensystems an der ersten Legierung kann mindestens 80% betragen. Es kann so vorteilhaft kostengünstig eine hohe Qualität eines erfindungsgemäßen Rotors erreicht werden, indem vorteilhaft ein geringer Massenanteil der ersten Legierung ein weiteres Element des Periodensystems aufweist.

Vorteilhaft kann der geringe Masseanteil der ersten Legierung ein weiteres Element des Periodensystems aufweisen, so dass die mechanische Festigkeit des gegossenen Metallbereichs größer ist als bei einem gegossenen Metallbereich mit vergleichbaren Abmessungen, der überwiegend eine Legierung aufweist, bei der der Masseanteil des metallischen Elements größer als 98% ist. Dies kann vorteilhaft dazu beitragen, dass das Blechpaket gegen Umwelteinflüsse mechanisch beständig zusammengehalten wird und der Rotor kostengünstiger gefertigt werden kann. Der erste Teil der Nut kann dann in den Richtungen senkrecht zu der axialen Richtung eine geringere Erstreckung aufweisen, da der gegossene Metallbereich vorteilhaft schon bei einem geringeren Querschnitt eine notwendige Kraft für das mechanisch beständige Zusammenhalten des Blechpakets aufbringen kann. Unter anderem kann dadurch eine kostengünstige Vorrichtung zum Gießen des gegossenen Metallbereichs eingesetzt werden, da die Vorrichtung aus einer geringeren Menge an erstem Material den gegossenen Metallbereich vorteilhaft kostengünstig herstellen kann.

Vorteilhaft kann der Masseanteil des metallischen Elements des Periodensystems an der ersten Legierung mindestens 98% betragen. Es kann so vorteilhaft kostengünstig eine hohe Qualität eines erfindungsgemäßen Rotors erreicht werden, da aufgrund des Masseanteils von mindestens 98% die Materialeigenschaften, z.B. die elektrische Leitfähigkeit für die Verwendung des Rotors in einer elektrischen Maschine mit hohem Wirkungsgrad, im ersten Material so stark ausgeprägt sind, dass der erste Teil in der Nut eine geringe Erstreckung für eine hohe Qualität des Rotors aufweisen muss. Es wird dadurch unter anderem eine geringere Menge an flüssigem erstem Material bei einem Gießen des gegossenen Metallbereichs benötigt. Es kann z.B. zu einem Gießen des gegossenen Metallbereichs eine Legierung mit mindestens 99% Masseanteile des metallischen Elements des Periodensystems an der ersten Legierung verwendet werden.

In einer weiteren vorteilhaften Ausgestaltung eines erfindungsgemäßen Rotors weist das zweite Material überwiegend eine zweite Legierung auf, in der das metallische Element des Periodensystems den größten Massenanteil aufweist. Es kann so vorteilhaft kostengünstig eine hohe Qualität bei dem Rotor erreicht werden, da für das Einlegeteil ein zweites Material verwendet werden kann, das mit dem Einlegeteil vorteilhaft kostengünstig über die Verbindungszone die stoffschlüssige Verbindung eingeht. Vorteilhaft müssen hierfür Vorrichtungen und Verfahren zur Herstellung des Rotors oder zum Gießen des gegossenen Metallbereichs nur geringfügig angepasst werden. Insbesondere kann eine Anpassung vorteilhaft nur durch Verwenden eines Einlegeteils aus einem anderen zweiten Material bestehen.

Der Massenanteil des metallischen Elements des Periodensystems an der zweiten Legierung kann mindestens 99% betragen. Es kann dadurch eine hohe Qualität eines erfindungsgemäßen Rotors erreicht werden, die vorteilhaft kostengünstig mit einer Qualität eines Rotors vergleichbar ist, dessen Nutfüllung aus einem gegossenen Metallbereich besteht. Der erste Teil in der Nut kann dabei vorteilhaft eine geringe Erstreckung aufweisen. Es wird dadurch unter anderem eine geringere Menge an flüssigem erstem Material bei einem Gießen des gegossenen Metallbereichs benötigt.

In einer weiteren vorteilhaften Ausgestaltung eines erfindungsgemäßen Rotors ist das zweite Material gleich dem ersten Material. Es kann dadurch eine Qualität eines erfindungsgemäßen Rotors erreicht werden, die vorteilhaft kostengünstig mit einer Qualität eines vergleichbaren Rotors ist, dessen Nutfüllung aus einem gegossenen Metallbereich aus dem ersten Material besteht. Da sich die Nutfüllungen des vergleichbaren Rotors und die Nutfüllung in dieser vorteilhaften Ausgestaltung höchstens in der Verbindungszone in ihren Massenanteilen an den Elementen des Periodensystems wesentlich unterscheiden kann der erfindungsgemäße Rotor den vergleichbaren Rotor vorteilhaft kostengünstig ersetzen.

In einer weiteren vorteilhaften Ausgestaltung einer erfindungsgemäßen elektrischen Maschine das metallische Element des Periodensystems Aluminium. Das erste Material kann so kostengünstig verarbeitet werden, da das erste Material mit dem metallischen Element Aluminium vorteilhaft kostengünstig ist und ein kostengünstiges Gießen des gegossenen Metallbereichs ermöglicht. Unter anderem kann das erste Material mit dem metallischen Element Aluminium einen niedrigen Schmelzpunkt aufweisen und kostengünstiger in der Beschaffung sein. Insbesondere kann der Schmelzpunkt des ersten Materials niedriger als 800 °C sein.

In einer weiteren vorteilhaften Ausgestaltung eines erfindungsgemäßen Rotors weist ein Verbundteil den gegossenen Metallbereich und das Einlegeteil auf, wobei die Masse des Verbundteils größer als 80 kg, insbesondere größer als 92 kg, ist. Ein Rotor mit einer derartig großen Masse bzw. gleichbedeutend mit einer derartig großen Abmessung kann vorteilhaft kostengünstig mit einer Vorrichtung zum Gießen des gegossenen Metallbereichs gegossen werden, die in einem Verfahrensschritt beim Gießen, insbesondere beim Druckgießen, des gegossenen Metallbereichs maximal 80 kg, insbesondere 92 kg, in die Nut des Rotors transportieren kann.

In einer weiteren vorteilhaften Ausgestaltung einer erfindungsgemäßen Serie von Rotoren weist der zweite Rotor ein zweites Verbundteil auf, das den gegossenen zweiten Metallbereich und ein zweites Einlegeteil aufweist, wobei eine geometrische Abmessung des zweiten Einlegeteils wie eine geometrische Abmessung des Einlegeteils ist. So können vorteilhaft kostengünstig vorgefertigte Profile für Rotoren einer Serie mit unterschiedlichen Abmessungen eingesetzt werden.

In einer weiteren vorteilhaften Ausgestaltung eines Verfahrens zur Herstellung eines erfindungsgemäßen Rotors wird an dem ersten axialen Ende des Blechpakets ein erstes Werkzeug angeordnet, das eine Form des Endbereichs vorgibt. Des Weiteren wird an dem zweiten axialen Ende des Blechpakets ein zweites Werkzeug angeordnet, das eine Form des weiteren Endbereichs vorgibt. Vorteilhaft kostengünstig wird in einem Verfahrensschritt nur über eine Öffnung oder mehrere Öffnungen des ersten Werkzeugs das erste Material von der Vorrichtung zum Gießen, insbesondere Druckgießen, des gegossenen Metallbereichs in das erste Werkzeug transportiert und über die Nut zum zweiten axialen Ende transportiert. Nach einem Erstarren des ersten Materials in dem ersten Werkzeug, dem Blechpaket und dem zweiten Werkzeug kann so der gegossene Metallbereich mit dem Endbereich und dem weiteren Endbereich vorteilhaft aus dem ersten Material bestehen.

In vorteilhafter kostengünstiger Weise kann ein Druckgussverfahren bei dem Verfahren zur Herstellung eines Rotors mit einer hohen Qualität genutzt werden, indem das erste Material mit einem Druckgussverfahren in das erste Werkzeug transportiert wird. Bei einem Druckgussverfahren wird unter anderem das erste Material in einem flüssigen Zustand unter hohem Druck, insbesondere im Druckbereich von 10 MPa bis 200MPa in das erste Werkzeug transportiert. Dementsprechend wir eine Vorrichtung zum Druckgießen vorteilhaft kostengünstiger, wenn die Masse des unter hohem Druck zu transportierenden ersten Material erfindungsgemäß gering ist.

Vorteilhafte Ausgestaltungen erfindungsgemäßer Rotoren, erfindungsgemäßer Serien von Rotoren, erfindungsgemäßer Einlegeteile, und erfindungsgemäßer elektrischer Maschinen, sowie erfindungsgemäßer Verfahren zur Herstellung erfindungsgemäßer Rotoren und eine erfindungsgemäße Verwendung eines Einlegeteils ergeben sich vorteilhaft durch Kombination einiger oder mehrerer beschriebener Merkmale.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigen:
- FIG 1: ein Ausführungsbeispiel eines Rotors mit einem Einlegeteil,
- FIG 2: ein Ausführungsbeispiel eines Einlegeteils für den Rotor,
- FIG 3: ein Ausführungsbeispiel einer Vorrichtung zum Druckgießen eines gegossenen Metallbereichs mit einem Blechpaket und einem Einlegeteil in einem ersten und einem zweiten Werkzeug,
- FIG 4: ein Ausführungsbeispiel einer elektrischen Maschine mit dem Rotor,
- FIG 5: ein Ausführungsbeispiel einer Serie von Rotoren für mindestens eine elektrische Maschine.

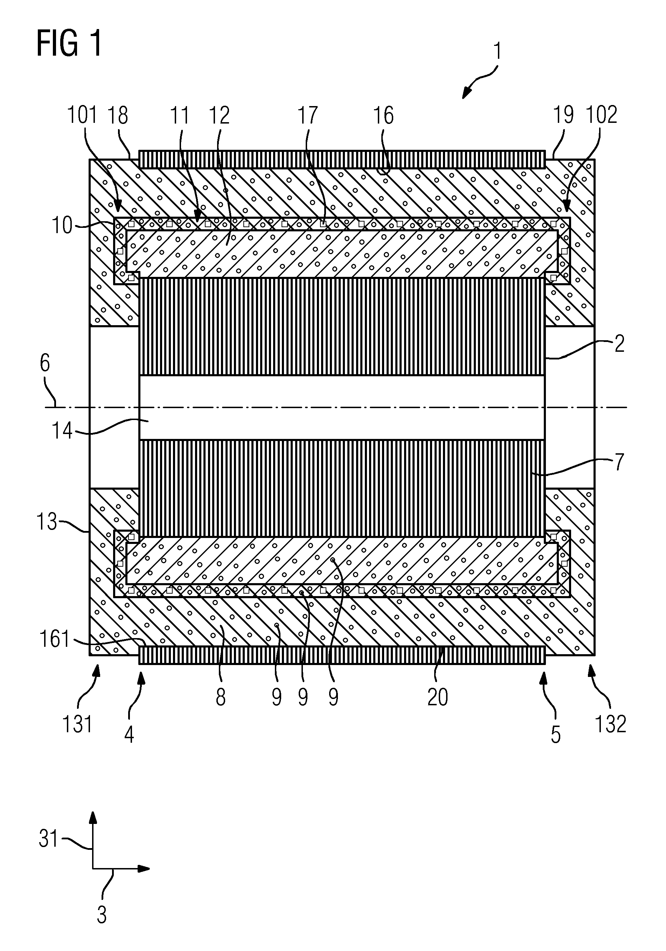

FIG 1 zeigt ein Ausführungsbeispiel eines Rotors 1 für eine elektrische Maschine 43, der ein Blechpaket 2 umfasst, das in einer axialen Richtung 3 angeordnete Bleche 7 und eine Nut 16 aufweist. Das Blechpaket 2 und die Nut 16 erstrecken sich in der axialen Richtung 3 von einem ersten axialen Ende 4 zu einem zweiten axialen Ende 5 entlang einer Drehachse 6, wobei die Nut 16 eine Nutfüllung aufweist, die ein erstes Material 8 umfasst. Das erste Material 8 weist ein metallisches Element 9 des Periodensystems auf, das in dem Ausführungsbeispiel des Rotors 1 Aluminium ist. Die Nutfüllung weist einen gegossenen Metallbereich 13 auf, der sich mit einem Endbereich 18 an dem ersten axialen Ende 4 in einer ersten Richtung 31 senkrecht zu der axialen Richtung 3 zumindest teilweise über das Blechpaket 2 erstreckt, wobei der gegossene Metallbereich 13 von dem ersten axialen Ende 4 bis zu dem zweiten axialen Ende 5 durch die Nut 16 verläuft und in der ersten Richtung 31 senkrecht zu der axialen Richtung 3 einen ersten Teil der Nut 16 mit einem ersten Material 8 ausfüllt.

Ein Einlegeteil 10 füllt in der ersten Richtung 31 senkrecht zu der axialen Richtung 3 einen zweiten Teil der Nut 16 mit einem zweiten Material aus, wobei das zweite Material 12 das metallische Element 9 des Periodensystems aufweist. Das Einlegeteil 10 und der gegossene Metallbereich 13 sind durch eine Verbindungszone 11 stoffschlüssig verbunden. Die Nutfüllung der Nut 16 des Rotors 1 gemäß dem Ausführungsbeispiel besteht aus dem gegossenen Metallbereich 13, dem Einlegeteil 10 und gegebenenfalls der Verbindungszone 11, wobei der gegossene Metallbereich 13 aus dem ersten Material 8 besteht.

Die Verbindungszone 11 kann in der Nut 16 nicht oder nur unvollkommen ausgebildet vorhanden sein, wenn z.B. größerer Temperaturverluste einer Schmelze in der Nut 16 bei einem Gießen des gegossenen Metallbereichs 13 entstehen, die ein Bilden der stoffschlüssigen Verbindung durch die Verbindungszone 11 mit hoher Qualität in der Nut 16 nicht sicherstellen.

Dementsprechend kann die Verbindungszone 11 in der axialen Richtung 3 eine Unterbrechung aufweisen, die die Verbindungszone 11 in einer Verbindungszone 11 an einem Ende des ersten Einlegeteils 10 und eine weitere Verbindungszone an einem weiteren Ende des ersten Einlegeteils 10 trennt. In dem Ausführungsbeispiel der FIG 1 grenzt der erste Teil der Nut 16 direkt an den in der ersten Richtung 31 näher an der Drehachse 6 gelegenen Rändern der Bleche 7 des Blechpakets 2 an. Da an diesen Rändern der Bleche 7 kein oder nur im geringen Maße erstes Material 8 vorhanden ist, bildet sich dort keine Verbindungszone 11 aus. An diesen Rändern der Bleche 7 weist das Einlegeteil 10 noch eine metallische Beschichtung 22 an seiner Oberfläche auf, die aber der Einfachheit halber in den FIG 1, FIG 4 und FIG 5 dort nicht eingezeichnet sind. Die Atome des metallischen Elements 9 des Periodensystems sind in den FIG durch nicht ausgefüllte kleine Kreise symbolisch eingezeichnet.

Der Rotor 1 der FIG 1 umfasst weitere Nuten, die sich in der axialen Richtung 3 von dem ersten axialen Ende 4 zu dem weiteren axialen Ende 5 entlang der Drehachse 6 erstrecken, wobei die weiteren Nuten Nutfüllungen aufweisen. Der gegossene Metallbereich 13 umfasst gegossene Teilbereiche 20, die in den weiteren Nuten 161 von dem ersten axialen Ende 4 zu dem zweiten axialen Ende 5 verlaufen und in der ersten Richtung 31 senkrecht zu der axialen Richtung 3 erste Teile der weiteren Nuten 161 mit dem ersten Material ausfüllen. So weisen die Nutfüllungen der weiteren Nuten 161 die gegossenen Teilbereiche 20 auf, wobei weitere Einlegeteile in der ersten Richtung 31 senkrecht zu der axialen Richtung 3 zweite Teile der weitere Nuten 161 mit dem zweiten Material 12 ausfüllen und die weiteren Einlegeteile und die gegossenen Teilbereiche 20 durch weitere Verbindungszonen stoffschlüssig verbunden sind.

Ein Verbundteil weist den gegossenen Metallbereich 13 und das mit dem gegossenen Metallbereich 13 durch die Verbindungszone 11 stoffschlüssig verbundene Einlegeteil 10 auf. Das Verbundteil weist auch die weiteren Einlegeteile auf. Das Verbundteil bildet die Nutfüllungen der Nut 16 und der weiteren Nuten 161, insbesondere aller Nuten, die sich in der axialen Richtung 3 von einem ersten axialen Ende 4 zu einem zweiten axialen Ende 5 entlang einer Drehachse 6 erstrecken.

Ein Ende 101 des Einlegeteils 10 erstreckt sich in den Endbereich 18 des gegossenen Metallbereichs 13, wobei das Ende 101 des Einlegeteils 10 durch die Verbindungszone 11 stoffschlüssig mit dem gegossenen Metallbereich 13 verbunden ist. Der gegossene Metallbereich 13 erstreckt sich mit einem weiteren Endbereich 19 an dem zweiten axialen Ende 5 in der ersten Richtung 31 senkrecht zu der axialen Richtung 3 zumindest teilweise über das Blechpaket 2, wobei sich ein weiteres Ende 102 des Einlegeteils 10 in den weiteren Endbereich 19 des gegossenen Metallbereichs 13 erstreckt und das weitere Ende 102 des Einlegeteils 10 durch eine weitere Verbindungszone stoffschlüssig mit dem gegossenen Metallbereich 13 verbunden ist. Die weitere Verbindungszone und die Verbindungszone sind in den Figuren als eine von dem Ende 101 des Einlegeteils 10 bis zum weiteren Ende 102 des Einlegeteils durchgehende Verbindungszone 11 dargestellt. Die durchgehende Verbindungszone 11 kann jedoch in mindestens zwei Teile getrennt sein, wenn das Einlegeteil 10 vor einem Gießen des gegossenen Metallbereichs 13 die metallische Beschichtung 22 nur an dem Ende 101 und dem weiteren Ende 102 aufweist oder die Verbindungszone 11 in der Nut 16 nicht oder nur unvollkommen ausgebildet vorhanden ist. Die mindestens zwei Teile der Verbindungszone 11 weisen jeweils eine Verbindungsfläche zu dem Einlegeteil 10 und jeweils eine Verbindungsfläche zu dem gegossenen Metallbereich 13 auf. Der Flächeninhalt der Verbindungsflächen ist jeweils alleine genommen mindestens so groß wie der Flächeninhalt einer Querschnittsfläche des Einlegeteils 10. So kann die stoffschlüssige Verbindung mit vorteilhaft hoher Qualität in den Verbindungseigenschaften zur Verfügung gestellt werden.

Der Rotor 1 weist eine Öffnung 14 für eine Welle auf, wobei die Öffnung 14 in der axialen Richtung 3 durch den Rotor 1 verläuft.

Die Verbindungszone 11 weist ein weiteres metallisches Element 17 des Periodensystems auf, das Zinn ist. Die Atome des weiteren metallischen Elements 17 des Periodensystems sind in den FIG durch nicht ausgefüllte kleine Rechtecke symbolisch eingezeichnet. Das weitere metallische Element 17 ist in dem ersten Material 8 des gegossenen Metallbereichs 13 und/oder dem zweiten Material 12 des Einlegeteils 10 nicht vorhanden oder inhomogen verteilt.

In dem Ausführungsbeispiel des Rotors 1 weist das erste Material überwiegend eine erste Legierung auf, in der das metallische Element 9 des Periodensystems den größten Massenanteil aufweist. Der Masseanteil des metallischen Elements des Periodensystems an der ersten Legierung beträgt mindestens 99%. Die erste Legierung ermöglicht dabei vorteilhaft kostengünstig eine Herstellung eines Rotors 1 mit einer hohen Qualität für eine elektrische Maschine 43 durch ein Druckgussverfahren. Die erste Legierung kann als weitere Massenanteile Verunreinigungen durch Elemente des Periodensystems wie z.B. Silizium, Eisen, Kupfer, Zink oder Titan aufweisen. Das erste Material 8 kann zusätzlich Verunreinigungen aus der Schmelze des ersten Materials 8 durch ein Gießen des gegossenen Metallbereichs 13 aufweisen. Das zweite Material 12 weist überwiegend eine zweite Legierung auf, in der das metallische Element 9 des Periodensystems den größten Massenanteil aufweist. Das zweite Material 12 ist gleich dem ersten Material 8. Dies bezieht sich aber nicht zwingend auf Verunreinigungen des ersten Materials 8 und des zweiten Materials 12, da die Verunreinigungen durch Abweichungen in einem Herstellungsprozess des ersten Materials 8 und zweiten Materials 12 bedingt sein können oder vorteilhaft durch die Verwendung des Einlegeteil 10 im zweiten Material 12 geringer sind als im gegossenen Metallbereich 13. Zu einem Gießen des gegossenen Metallbereichs 13 des Rotors 1 gemäß dem Ausführungsbeispiel wird so eine Legierung mit mindestens 99,5% Masseanteile Aluminium verwendet. Ein Stück als Ausgangspunkt für eine Herstellung des Einlegeteils 10 wird aus einer Legierung mit mindestens 99,5% Masseanteile Aluminium hergestellt.

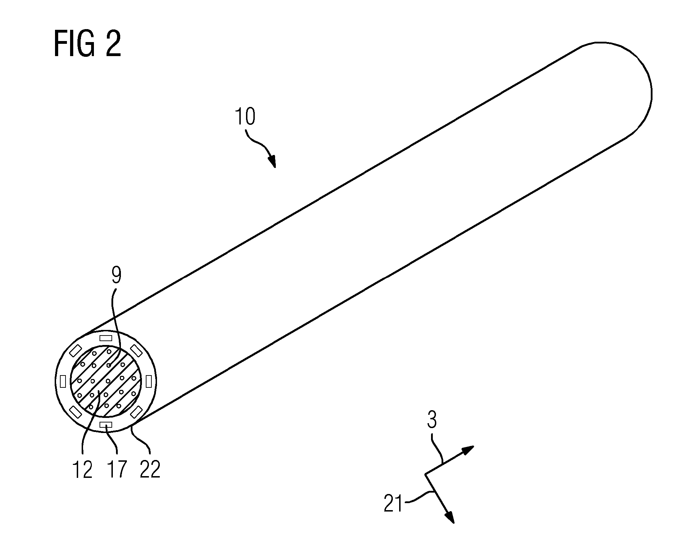

Die FIG 2 zeigt ein Ausführungsbeispiel eines Einlegeteils 10 für den Rotor 1. Das Einlegeteil 10 weist an seiner Oberfläche die metallische Beschichtung 22 auf, die das weitere metallische Element 17 des Periodensystems aufweist. Das Einlegeteil 10 erstreckt sich in der axialen Richtung 3 und weist die Querschnittsfläche des Einlegeteils 10 auf, die kreisförmig ist und in der sich eine erste Richtung 21 senkrecht zu der axialen Richtung 3 erstreckt. Die metallische Beschichtung 22 bedeckt im Wesentlichen die Oberfläche des Einlegeteils 10, die die Grundfläche und die Deckfläche sowie die Mantelfläche des zylinderförmigen Einlegeteils umfasst. Bei einem Verfahren zur Herstellung des Einlegeteils 10 wird die Oberfläche mit einem dritten Material beschichtet, das das weitere metallische Element 17 des Periodensystems aufweist. Das dritte Material ist Zinn. Bei einem Verfahren zu Herstellung des Rotors 1 wird dann die Beschichtung 22 beim Gießen, insbesondere Druckgießen, des gegossenen Metallbereichs 13 mit dem ersten Material 8 angeschmolzen oder aufgeschmolzen. So kann dann die Verbindungszone 11 des in FIG 1 gezeigten Rotors 1 das weitere metallische Element 17 des Periodensystems aufweisen.

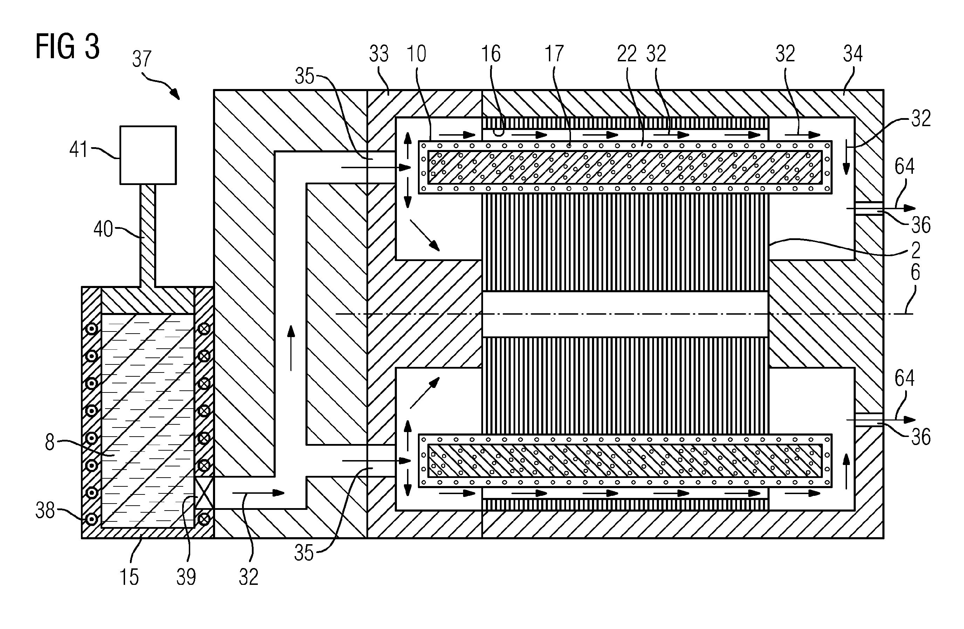

FIG 3 zeigt ein Ausführungsbeispiel einer Vorrichtung 37 zu einem Druckgießen eines gegossenen Metallbereichs mit einem Blechpaket 2 und einem Einlegeteil 10 in einem ersten Werkzeug 33 und in einem zweiten Werkzeug 34. In dem Blechpaket 2 sind das Einlegeteil 10 in die Nut 16 und weitere Einlegeteile in die weiteren Nuten eingelegt worden. Anschließend wurde das erste Werkzeug 33 an dem ersten axialen Ende 4 des Blechpakets 2 angeordnet, wobei das erste Werkzeug 33 eine Form des Endbereichs 18 des gegossenen Metallbereichs 13 vorgibt. Des Weiteren wird an dem zweiten axialen Ende 5 des Blechpakets 2 das zweite Werkzeug 34 angeordnet, das eine Form des weiteren Endbereichs 19 vorgibt. Die Vorrichtung 37 zum Gießen des gegossenen Metallbereichs 13 umfasst eine Heizung 38, die das erste Material 8 in einer Kammer 15 als Schmelze in einem flüssigen Zustand bereithält. Bei einem Druckgießen des gegossenen Metallbereichs 13 wird ein Ventil 39 an der Kammer 15 der Vorrichtung 37 geöffnet und das erste Material 8 im flüssigen Zustand unter hohem Druck durch einen Antrieb 41 mit einem Kolben 40 in das erste Werkzeug 33, die Nut 16 und in die weiteren Nuten des Blechpakets 2, sowie in das zweite Werkzeug 34 transportiert. In FIG 3 werden die Richtungen 32, in denen das erste Material 8 in einem Verfahrensschritt über mehrere Öffnungen 35 des ersten Werkzeugs 33 von der Vorrichtung 37 zum Gießen, insbesondere Druckgießen, des gegossenen Metallbereichs 13 in das erste Werkzeug 33 transportiert und über die Nut 16 und die weiteren Nuten zum zweiten axialen Ende 5 transportiert wird, durch Pfeile repräsentiert. Die Luft, die sich innerhalb der Anordnung zu einem Gießen des gegossenen Metallbereichs 13, d.h. innerhalb der Vorrichtung 37, des ersten Werkzeugs 33, des Blechpakets 2 oder des zweiten Werkzeugs 34 befindet, kann über Entlüftungsöffnungen 36 in eine Richtung 64 entweichen. Nach einem Erstarren des ersten Materials 8 in dem ersten Werkzeug 33, dem Blechpaket 2 und dem zweiten Werkzeug 34 besteht der gegossene Metallbereich 13 mit dem Endbereich 18 und dem weiteren Endbereich 19 aus dem ersten Material 8.

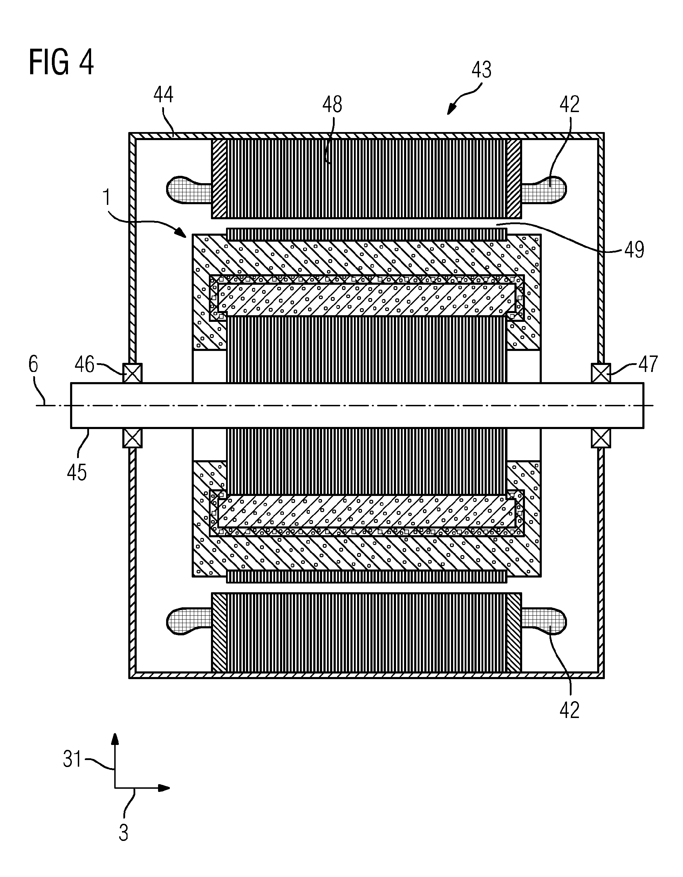

In einem ein weiteren Ausführungsbeispiel eines Rotors mit einem Einlegeteil weist ein erste Material einen niedrigeren Schmelzpunkt auf als das zweite Material 12. Die hier beschriebenen Merkmale des weiteren Ausführungsbeispiels des Rotors werden mit denselben Bezeichnungen wie in der Beschreibung der Ausführungsbeispiele der FIG 1 bis FIG 5 bezeichnet, so dass die FIG 1 bis FIG 5 auch das weitere Ausführungsbeispiel darstellen. Es weist jedoch in dem weiteren Ausführungsbeispiel des Rotors das erste Material überwiegend eine erste Legierung auf, in der der Masseanteil des metallischen Elements 9 des Periodensystems mindestens 80% beträgt. Ein geringer Masseanteil der ersten Legierung weist ein weiteres Element des Periodensystems auf, so dass die mechanische Festigkeit eines gegossenen Metallbereichs größer ist als bei dem gegossenen Metallbereich 13 mit vergleichbaren Abmessungen, der überwiegend eine Legierung aufweist, bei der der Masseanteil des metallischen Elements 9 größer als 98% ist. Die Legierung, bei der der Masseanteil des metallischen Elements 9 größer als 98%, kann z.B. die erste Legierung des gegossenen Metallbereichs 13 der Ausführungsbeispiele der FIG 1 bis FIG 5 sein, bei der zum Gießen des gegossenen Metallbereichs 13 eine Legierung mit mindestens 99,5% Masseanteile Aluminium verwendet wird. Das weitere Element des Periodensystems ist in dem weiteren Ausführungsbeispiels des Rotors Kupfer. Die erste Legierung ist in dem weiteren Ausführungsbeispiel des Rotors AlSi9Cu3. Wenn man zusätzliche Figuren analog zu den FIG 1 bis FIG 5 zu dem weiteren Ausführungsbeispiel des Rotors erstellen würde, könnte man das weitere Element des Periodensystems Cu durch ausgefüllte Kreise ähnlich wie die nicht ausgefüllten Kreise in dem gegossenen Metallbereich 13 und in der Verbindungszone 11 repräsentieren. Weiterhin könnte man ein weiteres Ausführungsbeispiel einer Serie von Rotoren für mindestens eine elektrische Maschine mit mindestens drei Rotoren erhalten, in dem man für eine weitere Figur die FIG 3 heranzieht und um einen weiteren dritten Rotor ergänzt, der dem Ausführungsbeispiel der FIG 1 entspricht, wobei das erste Material gemäß dem weiteren Ausführungsbeispiels des Rotors vorhanden ist. Als Einlegeteil für das weitere Ausführungsbeispiel des Rotors wird das gleiche Einlegeteil 10 wie in dem Ausführungsbeispiel gemäß der FIG 1 verwendet. Bei der Herstellung des Rotors gemäß des weiteren Ausführungsbeispiel oder beim Druckgießen des gegossenen Metallbereichs mit einer Vorrichtung gemäß FIG 3, kann das erste Material aufgrund seines niedrigeren Schmelzpunktes in einem ausreichend flüssigen Zustand in einer ausreichenden Menge als Schmelze für den mit hoher Qualität vorteilhaft homogen gegossenen Metallbereich, insbesondere vorteilhaft für einen Endbereich und einen weiteren Endbereich des gegossenen Metallbereichs, und für die stoffschlüssige Verbindung mit vorteilhaft hoher Qualität in den Verbindungseigenschaften zur Verfügung stehen. Zusätzlich trägt das erste Material mit dem weiteren Element des Periodensystems vorteilhaft dazu bei, dass das Blechpaket gegen Umwelteinflüsse mechanisch beständig zusammengehalten wird und der Rotor kostengünstiger gefertigt werden kann. FIG 4 zeigt ein Ausführungsbeispiel einer elektrischen Maschine 43 mit dem Rotor 1. Die elektrische Maschine 43 weist den Rotor 1 und einen Stator 48 auf. Der gegossene Metallbereich 13, das Einlegeteil 10 und deren stoffschlüssige Verbindung durch die Verbindungszone 11 ermöglichen ein vorteilhaftes magnetisches Zusammenwirken zwischen Rotor 1 und Stator 48 über einen Luftspalt 49. Der Luftspalt 49 ist in Richtungen 31 senkrecht zur axialen Richtung 3 durch den Stator 48 und den Rotor 1 begrenzt. In dem Ausführungsbeispiel der elektrischen Maschine 43 weist der Rotor 1 eine Einrichtung auf, um über den Luftspalt 49 mit dem Stator 48, insbesondere mit einer am Stator 48 befestigten Wicklung 42, magnetisch zusammenwirken zu können. In dem Ausführungsbeispiel der elektrischen Maschine 43 besteht die Einrichtung aus dem gegossenen Metallbereich 13 mit den gegossenen Teilbereichen 20, dem Einlegeteil 10, der Verbindungszone 11, weiteren Einlegeteilen und weiteren Verbindungszonen. So ist das Ausführungsbeispiel der elektrischen Maschine 43 eine Asynchronmaschine, die als Rotor 1 einen Käfigläufer aufweist. Der Endbereich 18 des gegossenen Metallbereichs 13 verbindet den gegossenen Metallbereich 13 mit den gegossenen Teilbereichen 20 stoffschlüssig durch das erste Material 8 zu einem Kurzschlussring. Der gegossene Metallbereich 13 mit den gegossenen Teilbereichen 20, das Einlegeteil 10 und die weiteren Einlegeteile sind vorteilhaft Teil einer Kurzschlusswicklung, die durch den Endbereich 18 des gegossenen Metallbereichs 13 als Kurzschlussring an dem ersten axialen Ende 4 und dem weiteren Endbereich 19 des gegossenen Metallbereichs 13 als einem weiteren Kurzschlussring an dem zweiten axialen Ende 5 kurzgeschlossen ist.

Der Rotor 1 der elektrischen Maschine 43 weist für eine Drehung des Rotors 1 um die Drehachse 6 eine Welle 45 auf, die sich entlang der Drehachse 6 erstreckt und an der das Blechpaket 2 befestigt ist. Die Welle 45 ist mit Hilfe einer ersten Lagervorrichtung 46 in einem ersten Lagerschild und mit Hilfe einer zweiten Lagervorrichtung 47 in einem zweiten Lagerschild gelagert. Ein Gehäuse 44 der elektrischen Maschine 43 umfasst das erste und das zweite Lagerschild.

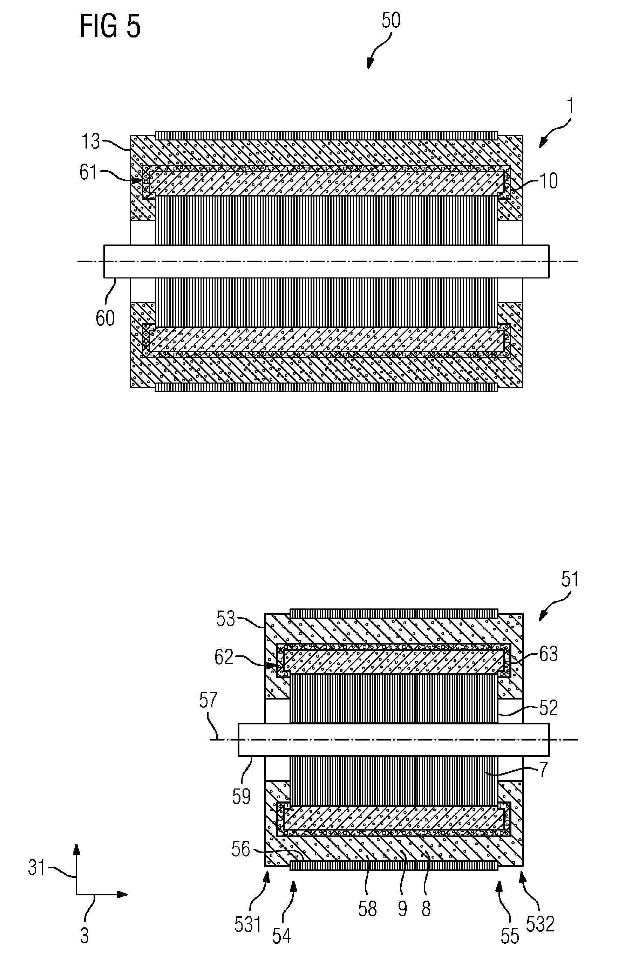

FIG 5 zeigt ein Ausführungsbeispiel einer Serie 50 von Rotoren 1, 51 für mindestens eine elektrische Maschine 43. Das Einlegeteil 10 weist die Querschnittsfläche 61 auf. Ein erster Rotor 1 der Serie 50 ist der Rotor gemäß FIG 1. Ein zweiter Rotor 51 der Serie 50 weist ein zweites Blechpaket 52 auf, das in einer axialen Richtung 3 angeordnete Bleche 7 und eine zweite Nut 56 aufweist, wobei sich das zweite Blechpaket 52 und die zweite Nut 56 in der axialen Richtung 3 von einem dritten axialen Ende 54 zu einem vierten axialen Ende 55 entlang einer Drehachse 57 erstrecken. Die zweite Nut 56 weist eine zweite Nutfüllung auf, die ein viertes Material 58 umfasst, wobei das vierte Material 58 das metallische Element 9 des Periodensystems aufweist. Die zweite Nutfüllung weist einen gegossenen zweiten Metallbereich 53 auf, der sich an dem dritten axialen Ende mit einem zweiten Endbereich 531 in einer ersten Richtung 31 senkrecht zu der axialen Richtung 3 zumindest teilweise über das zweite Blechpaket 52 erstreckt. Ein erstes Volumen, das das Volumen des gegossenen Metallbereichs 13 und das Volumen des Einlegeteils 10 umfasst, ist größer als ein zweites Volumen, das das Volumen des gegossenen zweiten Metallbereichs 53 umfasst. Da der zweite Rotor 51 ein zweites Einlegeteil 63 umfasst, umfasst das zweite Volumen das Volumen des gegossenen zweiten Metallbereichs und das Volumen des zweiten Einlegeteils 63. Bei der Serie 50 ist die Länge des Blechpakets 2 des ersten Rotors 1, die zwischen dem ersten axialen Ende 4 und dem zweiten axialen Ende 5 des Blechpakets 2 des ersten Rotors 1 gemessen wird, größer als die Länge des zweiten Blechpakets 52, die zwischen dem dritten axialen Ende 54 und dem vierten axialen Ende 55 des zweiten Blechpakets 52 gemessen wird. Da die Querschnittsfläche 61 des Einlegeteils 10 den gleichen Flächeninhalt aufweist wie die Querschnittsfläche 62 des zweiten Einlegeteils 63, ist das erste Volumen größer als das zweite Volumen. Das vierte Material 58 ist in dem Ausführungsbeispiel der Serie 50 gleich dem ersten Material 8.

Da der erste Rotor 1 weitere Einlegeteile in weiteren Nuten 161 aufweist, umfasst das erste Volumen auch die Volumina der weiteren Einlegeteile. Entsprechendes gilt auch für den zweiten Rotor 51. Da alle weiteren Nuten 161 des ersten Rotors 1 und zweiten Rotors 51 weitere Einlegeteile aufweisen, weist das erste Volumen das Volumen des Verbundteils des ersten Rotors 1 auf, das die Nutfüllung aller Nuten des ersten Rotors 1 umfasst. Entsprechend weist das zweite Volumen das Volumen eines zweiten Verbundteils des zweiten Rotors 51 auf, das die Nutfüllung aller Nuten des zweiten Rotors 51 umfasst. Das erste Volumen des Verbundteils ist größer als das zweite Volumen des zweiten Verbundteils.

Bei der Serie 50 weist der zweite Rotor 51 das zweite Verbundteil auf, das den gegossenen zweiten Metallbereich 53 und das zweite Einlegeteil 63 aufweist, wobei eine geometrische Abmessung des zweiten Einlegeteils 63 wie eine geometrische Abmessung des Einlegeteils 10 ist. Die geometrische Abmessung des zweiten Einlegeteils 63 ist die Querschnittsfläche 62 des Einlegeteils 63. Die geometrische Abmessung des Einlegeteils 10 ist bei der Serie 50 die Querschnittsfläche 61 des Einlegeteils 10.

Vorteilhaft kostengünstig können das Einlegeteil 10 und das zweite Einlegeteil 63 sowie weitere Einlegeteile, die in den weiteren Nuten des ersten Rotors 1 und des zweiten Rotors 51 angeordnet sind, aus einem vorgefertigten Strangpressprofil für eine elektrische Maschine mit einer hohen Qualität hergestellt werden. Unter anderem kann ein bestimmtes Strangpressprofil für viele Rotoren einer Serie zur Herstellung der Einlegeteile verwendet werden. Weitere Rotoren der Serie 50, z.B. ein dritter Rotor und ein vierter Rotor, können sich vorteilhaft kostengünstig in der Länge des Blechpakets, im Durchmesser des Blechpakets, in der Nutform und/oder einer Querschnittsfläche einer Ausstanzung in Blechen des Blechpakets und/oder im zweiten Material 12 der zweiten Einlegeteile 63 unterscheiden. Die Verwendung von Einlegeteilen, die sich im zweiten Material 12, d.h. in der zweiten Legierung, unterscheiden ist unter anderem auch durch vorgefertigte Strangpressprofile aus den verschiedenen zweiten Materialien 12 vorteilhaft kostengünstig.

Wenn das Einlegeteil 10, das zweite Einlegeteil 63 oder die weiteren Einlegeteile an den Oberflächen eine metallische Beschichtung aufweisen sollen, kann vorteilhaft für die stoffschlüssige Verbindung, insbesondere bei vorgefertigten Strangpressprofilen, eine an den Oberflächen vorhandene Oxidschicht entfernt werden.

Obwohl die Erfindung im Detail durch die bevorzugten Ausführungsbeispiele näher beschrieben wurde, ist sie nicht durch die offenbarten Beispiele eingeschränkt und andere Variationen können vom Fachmann durchaus abgeleitet werden, ohne den Schutzumfang der Erfindung zu verlassen.

## Patentansprüche

1. Rotor (1, 51) für eine elektrische Maschine (43),
- der ein Blechpaket (2) umfasst, das in einer axialen Richtung (3) angeordnete Bleche (7) und eine Nut (16) aufweist,
- wobei sich das Blechpaket (2) und die Nut (16) in der axialen Richtung (3) von einem ersten axialen Ende (4) zu einem zweiten axialen Ende (5) entlang einer Drehachse (6) erstrecken,
- wobei die Nut (16) eine Nutfüllung aufweist, die ein erstes Material (8) umfasst,
- wobei das erste Material (8) ein metallisches Element (9) des Periodensystems aufweist,
- wobei die Nutfüllung einen gegossenen Metallbereich (13) aufweist, der sich mit einem Endbereich (18) an dem ersten axialen Ende (4) in einer ersten Richtung (21, 31) senkrecht zu der axialen Richtung (3) zumindest teilweise über das Blechpaket (2) erstreckt,
- wobei der gegossene Metallbereich (13) von dem ersten axialen Ende (4) bis zu dem zweiten axialen Ende (5) durch die Nut (16) verläuft und in der ersten Richtung (31) senkrecht zu der axialen Richtung (3) einen ersten Teil der Nut (16) mit einem ersten Material (8) ausfüllt,
- wobei ein Einlegeteil (10) in der ersten Richtung (31) senkrecht zu der axialen Richtung (3) einen zweiten Teil der Nut (16) mit einem zweiten Material (12) ausfüllt,
- wobei das zweite Material (12) das metallische Element (9) des Periodensystems aufweist,
- wobei das Einlegeteil (10) und der gegossene Metallbereich (13) durch eine Verbindungszone (11) stoffschlüssig verbunden sind.

2. Rotor (1, 51) nach Anspruch 1, wobei das zweite Material (12) einen niedrigeren Schmelzpunkt als das erste Material (8) aufweist.

3. Rotor (1, 51) nach Anspruch 1, wobei das erste Material (8) einen niedrigeren Schmelzpunkt als das zweite Material (12) aufweist.

4. Rotor (1, 51) nach einem der vorhergehenden Ansprüche, wobei die Verbindungszone (11) ein weiteres metallisches Element (17) des Periodensystems aufweist.

5. Rotor (1, 51) nach einem der vorhergehenden Ansprüche, wobei sich ein Ende (101) des Einlegeteils (10) in den Endbereich (18) des gegossenen Metallbereichs (13) erstreckt und das Ende (101) des Einlegeteils (10) durch die Verbindungszone (11) stoffschlüssig mit dem gegossenen Metallbereich (13) verbunden ist.

6. Rotor (1, 51) nach einem der vorhergehenden Ansprüche, wobei das erste Material (8) überwiegend eine erste Legierung aufweist, in der das metallische Element (9) des Periodensystems den größten Massenanteil aufweist.

7. Rotor (1, 51) nach einem der vorhergehenden Ansprüche, wobei das zweite Material (12) überwiegend eine zweite Legierung aufweist, in der das metallische Element (9) des Periodensystems den größten Massenanteil aufweist.

8. Rotor (1, 51) nach einem der vorhergehenden Ansprüche, wobei das zweite Material (12) gleich dem ersten Material (8) ist.

9. Rotor (1, 51) nach einem der vorhergehenden Ansprüche, wobei das metallische Element (9) des Periodensystems Aluminium ist.

10. Serie (50) von Rotoren (1, 51) für mindestens eine elektrische Maschine (43), die einen ersten Rotor (1) nach einem der vorhergehenden Ansprüche und einen zweiten Rotor (51) aufweist, wobei der zweite Rotor (51)
- ein zweites Blechpaket (52) aufweist, das in einer axialen Richtung (3) angeordnete Bleche (7) und eine zweite Nut (56) aufweist,
- wobei sich das zweite Blechpaket (52) und die zweite Nut (56) in der axialen Richtung (3) von einem dritten axialen Ende (54) zu einem vierten axialen Ende (55) entlang einer Drehachse (57) erstrecken,
- wobei die zweite Nut (56) eine zweite Nutfüllung aufweist, die ein viertes Material (58) umfasst,
- wobei das vierte Material (58) das metallische Element (9) des Periodensystems aufweist,
- wobei die zweite Nutfüllung einen gegossenen zweiten Metallbereich (53) aufweist, der sich an dem dritten axialen Ende (54) mit einem zweiten Endbereich (531) in einer ersten Richtung (31) senkrecht zu der axialen Richtung (3) zumindest teilweise über das zweite Blechpaket (52) erstreckt,
- wobei ein erstes Volumen, das das Volumen des gegossenen Metallbereichs (13) und das Volumen des Einlegeteils (10) umfasst, größer ist als ein zweites Volumen, das das Volumen des gegossenen zweiten Metallbereichs (53) umfasst.

11. Serie (50) nach Anspruch 10, wobei der zweite Rotor (51) ein zweites Verbundteil aufweist, das den gegossenen zweiten Metallbereich (53) und ein zweites Einlegeteil (63) aufweist, wobei eine geometrische Abmessung des zweiten Einlegeteils (63) wie eine geometrische Abmessung des Einlegeteils (10) ist.

12. Einlegeteil (10, 63) für einen Rotor (1, 51) nach einem der vorhergehenden Ansprüche.

13. Elektrische Maschine (43), die einen Rotor (1) nach einem der Ansprüche 1 bis 9 und einen Stator (48) aufweist.

14. Verfahren zur Herstellung eines Rotors (1, 51), nach einem der Ansprüche 1 bis 9, wobei bei einem Gießen des gegossenen Metallbereichs (13) das Einlegeteil (10) und der gegossene Metallbereich (13) durch eine Verbindungszone (11) stoffschlüssig verbunden werden.

15. Verwendung eines Einlegeteils (10, 63) nach Anspruch 12 für einen Rotor (1, 51) nach einem der Ansprüche 1 bis 11.
